Europäisches Patentamt

European Patent Office

Office européen des brevets

(11) Numéro de publication: **0 328 451**
**A1**

(12) **DEMANDE DE BREVET EUROPEEN**

(21) Numéro de dépôt: 89400345.8

(22) Date de dépôt: 07.02.89

(51) Int. Cl.⁴: **A 01 G 7/00**

(30) Priorité: 10.02.88 FR 8801604

(43) Date de publication de la demande:
16.08.89 Bulletin 89/33

(84) Etats contractants désignés:
BE DE ES GB IT NL

(71) Demandeur: **Terrazzoni, René**
**05 - B.P. 1262**
**Abidjan 05 (CI)**

(72) Inventeur: **Terrazzoni, René**
**05 - B.P. 1262**
**Abidjan 05 (CI)**

(74) Mandataire: **Plaçais, Jean-Yves et al**
**Cabinet Netter 40, rue Vignon**
**F-75009 Paris (FR)**

(54) Procédé de développement et de culture d'une plante issue de la germination d'une noix de coco, et plante ainsi obtenue.

(57) Procédé de développement et de culture d'une plante issue de la germination d'une noix de coco, dans lequel, on ménage dans l'épaisseur de la noix de coco un passage (22) aboutissant dans la région supposée du germe (18), on introduit régulièrement de l'eau dans le passage pour assurer la germination et permettre le développement d'une tige (24) à travers ce passage et le développement initial de racines (28) dans le mésocarpe (14) de la noix, tout en maintenant le péricarpe (10) de la noix en dehors de tout contact avec l'humidité pour empêcher le développement de racines vers l'extérieur de la noix; et on apporte ensuite de la nourriture à la plante (26) qui s'est développée sur la tige (24).

FIG. 2

EP 0 328 451 A1

## Description

### Procédé de développement et de culture d'une plante issue de la germination d'une noix de coco, et plante ainsi obtenue.

L'invention concerne un procédé de développement et de culture d'une plante issue de la germination d'une noix de coco ainsi que la plante ainsi obtenue.

Elle s'applique à toutes les espèces de noix de coco, en particulier à celles du type Nucifera.

On sait que les graines ou noix de coco ont une forme généralement ovale et comprennent une enveloppe externe appelée "péricarpe" ainsi qu'une enveloppe interne appelée "endocarpe", entre lesquelles se trouve compris le "mésocarpe", qui est constitué d'une matière fibreuse communément appelée "bourre".

L'endocarpe constitue une enveloppe très résistante, également de forme ovale, qui renferme la chair de la noix, laquelle servira de matière nutritive à la germination de la plante.

La noix renferme en effet un germe qui est situé dans le mésocarpe et qui est relié à la cavité endocarpique par un cordon qui permet au germe de se nourrir à partir de la chair de la noix.

Cet apport de nourriture s'effectue par l'intermédiaire d'une substance spongieuse appelée "haustorium" qui transforme les substances nutritives en substances assimilables pour la plante. L'haustorium se développe en même temps que le germe, tandis que le volume de la chair diminue.

Le développement du germe conduit à la formation d'une plantule (tige et feuilles) qui traverse l'épaisseur de la noix et également à la formation de racines qui traversent l'épaisseur de la noix pour pouvoir assurer le développement ultérieur de la plante, par prélèvement de sa nourriture dans le milieu extérieur.

C'est ce processus de germination et de développement des noix de coco que l'on rencontre aussi bien dans leur milieu naturel que dans le cas de culture en pots. Dans ce dernier cas, la noix de coco est généralement enterrée en partie dans la terre du pot.

Le Demandeur a constaté que l'on pouvait orienter le développement et la culture d'une plante issue de la germination d'une noix de coco pour obtenir une plante ornementale d'un genre nouveau.

L'invention concerne plus particulièrement un procédé de développement et de culture d'une plante issue de la germination d'une noix de coco.

Selon une caractéristique essentielle de l'invention, on ménage dans l'épaisseur de la noix de coco un passage aboutissant dans la région supposée du germe; on introduit régulièrement de l'eau dans le passage pour assurer la germination et permettre le développement d'une tige à travers ce passage et le développement initial de racines dans le mésocarpe de la noix, tout en maintenant le péricarpe de la noix en dehors de tout contact avec l'humidité pour empêcher le développement de racines vers l'extérieur de la noix; et on apporte ensuite de la nourriture à la plante qui s'est développée sur la tige.

On obtient ainsi une plante d'un genre nouveau qui reste solidaire de la noix de coco et qui ne comporte aucune racine sortant à l'extérieur du péricarpe de la noix de coco. Ce dernier peut être décoré à volonté et posé, par exemple, sur un support tel un trépied.

De préférence, on ménage le passage précité suivant une direction généralement verticale, la noix étant disposée dans la position finale désirée. Ce passage peut être réalisé au moyen d'un outil de perçage, telle une mèche ou analogue, après repérage du germe par sondage.

Pour rendre étanche le péricarpe de la noix, on utilise, par exemple, un vernis ou analogue, et on dispose ensuite la noix sur un support non humide, pour empêcher le développement ultérieur de racines vers l'extérieur de la noix.

Dans une première forme de réalisation de l'invention, l'apport de nourriture à la plante ainsi obtenue comprend exclusivement un arrosage foliaire. Cet arrosage est réalisé par pulvérisation d'une solution d'engrais, telle que par exemple une solution d'engrais et d'oligo-éléments.

Dans une autre forme de réalisation de l'invention, après développement initial des racines dans le mésocarpe de la noix, on ménage au moins une fenêtre d'accès à la cavité endocarpique; on enlève au moins en partie le contenu de la cavité endocarpique; on pratique au moins une ouverture dans l'endocarpe pour établir une communication entre la cavité endocarpique et le mésocarpe; on remplit la cavité endocarpique d'un substrat pour permettre le développement ultérieur de racines dans le substrat; et on arrose le substrat à travers la fenêtre d'accès.

Dans ce cas, la cavité endocarpique de la noix de coco renferme un substrat contenant les réserves minérales et hydriques nécessaires à l'alimentation de la plante. Il suffit alors d'arroser régulièrement le substrat pour assurer le développement de la plante.

Toutefois, dans cette seconde forme de réalisation de l'invention, il est également possible de compléter l'apport de nourriture de la plante par un arrosage foliaire, comme dans le cas de la première forme précitée.

Dans les deux formes de réalisation précitées, on obtient une plante naine utilisable comme plante ornementale d'intérieur, dont la tige traverse l'épaisseur de la noix de coco et finit par former corps avec celle-ci et dont les racines se développent à l'intérieur même de la noix de coco.

Dans la description qui suit, faite seulement à titre d'exemple, on se réfère aux dessins annexés, sur lesquels :

- les figures 1 et 2 montrent schématiquement deux phases de germination et de développement d'une noix de coco pour former une plante ornementale conformément à la première forme de réalisation précitée;

- les figures 3 et 4 montrent schématiquement deux phases ultérieures de développement d'une noix de coco pour former une plante ornementale, conformément à la deuxième forme de réalisation précitée.

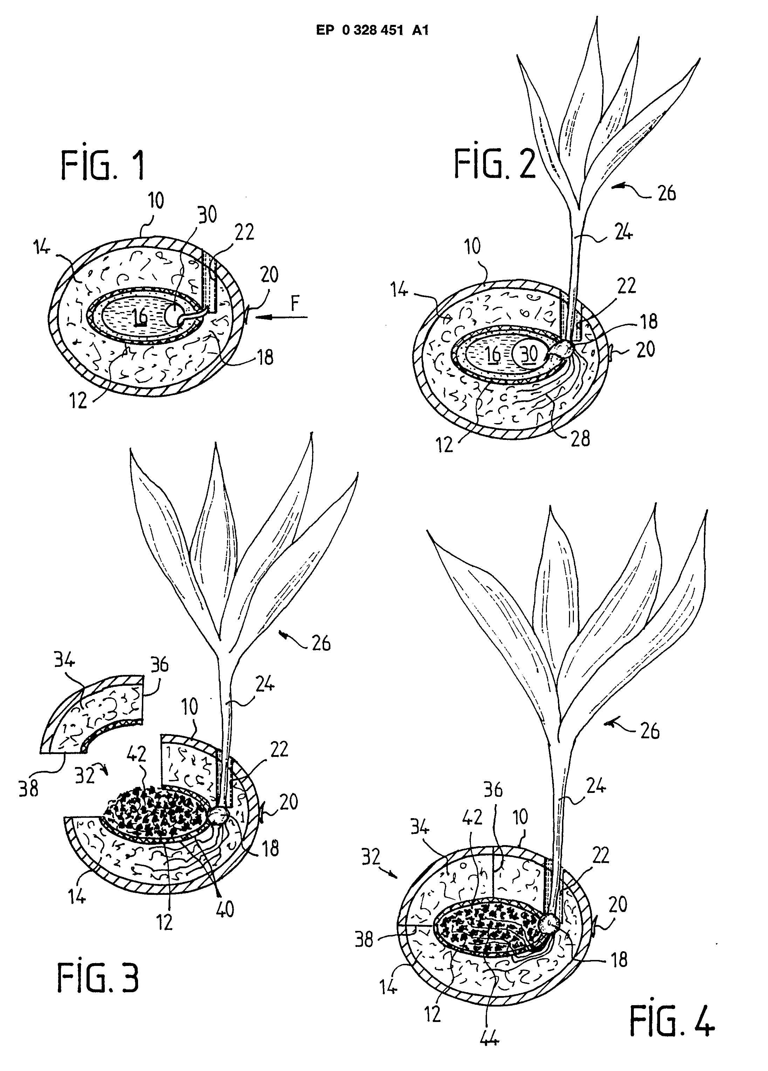

On se réfère tout d'abord à la figure 1 qui montre une noix de coco, représentée en coupe suivant un plan vertical, dans la position finale désirée qui, dans l'exemple, correspond à la grande dimension de la noix en position sensiblement horizontale. Cette noix, par exemple du genre Nucifera, comprend une enveloppe externe ou péricarpe 10 et une enveloppe interne ou endocarpe 12, entre lesquelles se trouve le mésocarpe 14, encore appelé "bourre". A l'intérieur de la cavité endocarpique limitée par l'endocarpe 12 se trouve la chair 16 de la noix de coco. Par ailleurs, la noix comprend un germe 18 situé à l'intérieur du mésocarpe 14 et en regard de l'attache ou "oeil" 20 de la noix. Conformément à la figure 1, la noix de coco est à l'état non germé, tel qu'obtenu après récolte.

Conformément à l'invention, on place la noix récoltée dans la position finale désirée, par exemple dans celle de la figure 1. Ensuite, on repère la position du germe 18 qui se trouve en regard de l'attache 20. Pour cela, il est avantageux d'introduire une tige, dans la direction de la flèche F de manière à mesurer l'épaisseur du mésocarpe. Cette opération de sondage ou repérage étant achevée, on réalise un passage 22 aboutissant dans la région du germe 18. Pour cela, on utilise avantageusement une mèche d'un diamètre de l'ordre de 2 à 3 cm pour percer successivement le péricarpe 10 et le mésocarpe 14. La noix étant dans sa position finale désirée, l'orientation du passage 22 est de préférence sensiblement verticale pour permettre, comme on le verra plus loin, le développement ultérieur de la tige suivant une direction généralement verticale.

Après exécution du passage 22, on rend étanche le péricarpe de la noix, par exemple au moyen d'un vernis, d'une peinture, etc..., et on dispose la noix sur un support non humide.

Pour cela, on peut par exemple disposer la noix sur des claies, sur du sable sec, etc... Comme on le verra plus loin, ceci est destiné à empêcher toute pénétration d'humidité à l'intérieur de la noix, à partir de l'extérieur, ce qui pourrait favoriser le développement de racines qui viendraient traverser le péricarpe de la noix pour rechercher l'humidité du milieu extérieur.

Ces opérations étant terminées, on introduit régulièrement de l'eau dans le passage 22 pour assurer la germination de la plante dans des conditions d'humidité et de température favorables, cette germination pouvant être naturelle ou forcée artificiellement. La durée de la phase de germination est variable selon l'état de la maturité de la noix traitée. A titre d'exemple, elle peut être comprise entre un et quatre mois, ce qui permet d'obtenir une plante ayant environ 20 à 40 cm de hauteur. Généralement, la quantité d'eau introduite dans le passage 22 pour permettre la germination de la plante est de l'ordre d'une dizaine de cm$^3$ pour un arrosage effectué quotidiennement ou tous les deux jours.

Sous l'action de cet arrosage, il se développe une tige 24 qui traverse le passage 22 pour donner naissance à une plantule 26 à l'extérieur de la noix (figure 2). Cet arrosage conduit également à un développement initial de racines 28 dans le mésocarpe 14 de la noix. Le traitement étanche du péricarpe 10 et le fait que cette noix soit sur un support non humide empêche que les racines ne viennent traverser le péricarpe 10. Dans ce premier stade de développement, les racines trouvent suffisamment d'humidité dans le péricarpe 14. Comme le montre également la figure 2, le volume de la chair 16 diminue progressivement au profit de celui de l'haustorium 30 qui assure la transformation des substances nutritives en substances assimilables pour la plante.

Bien que la chair de la noix de coco assure une réserve de nourriture propre à assurer le développement de la plante pendant plusieurs semaines voire plusieurs mois, il faut ensuite assurer la nourriture de la plante par un apport extérieur.

Dans cette première forme de réalisation de l'invention, l'apport de nourriture à la plante 26 ainsi obtenue comprend exclusivement un arrosage foliaire. Celui-ci est réalisé par pulvérisation, sur les feuilles de la plante, d'une solution d'engrais appropriée. Il peut s'agir d'une solution disponible dans le commerce, soit directement sous forme liquide, soit pouvant être obtenue à partir de granulés que l'on dissout dans l'eau. Il s'agit essentiellement d'engrais composés contenant des oligo-éléments.

Cet arrosage s'effectuera généralement entre une fois par jour à une fois tous les trois jours en fonction de l'hygrométrie ambiante.

On se réfère maintenant à la figure 3 qui montre une phase ultérieure du procédé de l'invention, dans le cas de la seconde forme de réalisation précitée.

Après émergence de la plantule 26 à l'extérieur du péricarpe de la noix, on ménage, dans l'épaisseur de la noix, au moins une fenêtre d'accès 32 (figure 3) à la cavité endocarpique de la noix. Dans l'exemple, on découpe un chapeau en forme de calotte 34 limitée par deux plans de coupe 36 et 38. Par Par la fenêtre 32 ainsi ménagée, on enlève au moins en partie le contenu de la cavité endocarpique par extraction totale ou partielle de l'haustorium 30.

Ensuite, on pratique au moins une ouverture 40 dans l'endocarpe de manière à assurer un ou plusieurs passages de communication entre la cavité endocarpique et le mésocarpe dans lequel se sont développées initialement les racines 28.

La ou les ouvertures 40 sont réalisées de préférence par perforation de l'endocarpe sur une surface plus ou moins importante pouvant atteindre ou dépasser le quart de la surface totale de l'endocarpe. En variante, au lieu de perforer l'endocarpe, on peut enlever une partie de celui-ci.

La réalisation de cette ou ces ouvertures s'effectue dans une région appropriée de l'endocarpe propre à favoriser la pénétration ultérieure des racines en croissance dans la cavité endocarpique. Cette région doit être située à proximité du germe. Toutefois, il est préféré qu'elle ne soit pas réalisée au fond de la cavité endocarpique, afin d'éviter une pénétration d'humidité dans le fond du mésocarpe.

Après exécution de la ou des ouvertures 40, on introduit, dans la cavité endocarpique, un substrat nutritif approprié 42 (figure 3). Ce substrat peut être constitué, par exemple, par un gel d'agar-agar, un gel de polyacrylamide, de billes de polystyrène, un mélange de sable et de terreau, de la bourre de coco, de la sciure de bois, une mousse cellulaire à pores ouverts, etc.... Avantageusement, ce substrat est enrichi en hormones rhizogènes, par exemple du type des auxines, pour favoriser le développement ultérieur de racines 44 à l'intérieur de la cavité endocarpique (figure 4). En effet, grâce à la ou aux ouvertures 40 ménagées dans l'endocarpe, les racines vont avoir tendance à traverser l'endocarpe pour puiser leur nourriture dans le substrat 42 contenu dans la cavité endocarpique. Ce substrat sera régulièrement arrosé, à travers la fenêtre 32, pour permettre le développement de la plante. Les racines 28 initialement formées dans le mésocarpe vont se dessécher et disparaître progressivement et seules subsisteront les racines 44 dans le substrat 42.

On obtient ainsi une plante naine, à caractère ornemental, qui puise sa nourriture à l'intérieur même de la cavité endocarpique de la noix. Il suffira de l'arroser régulièrement en enlevant à chaque fois la calotte 34 et en la remettant après arrosage.

Toutefois, même dans cette seconde forme de réalisation, il est possible de compléter l'apport de nourriture à la plante par un arrosage foliaire effectué comme dans le cas de la première forme de réalisation précitée.

La plante naine obtenue par la mise en oeuvre du procédé de l'invention peut être conservée plusieurs années en appartement à condition de l'arroser régulièrement.

Dans le cas de la première forme de réalisation précitée, cet arrosage s'effectue exclusivement sur les feuilles de la plante. En revanche, dans la seconde forme de réalisation précitée, cet arrosage s'effectue sur le substrat et est complété, le cas échéant, par un arrosage sur les feuilles.

Dans tous les cas, un apport régulier d'engrais liquide est nécessaire, que ce soit sur les feuilles ou sur le substrat.

## Revendications

1. Procédé de développement et de culture d'une plante issue de la germination d'une noix de coco, caractérisé en ce que l'on ménage dans l'épaisseur de la noix de coco un passage (22) aboutissant dans la région supposée du germe (18); on introduit régulièrement de l'eau dans le passage (22) pour assurer la germination et permettre le développement d'une tige (24) à travers ce passage et le développement initial de racines (28) dans le mésocarpe (14) de la noix, tout en maintenant le péricarpe (10) de la noix en dehors de tout contact avec l'humidité pour empêcher le développement de racines vers l'extérieur de la noix; et on apporte ensuite de la nourriture à la plante (26) qui s'est développée sur la tige (24).

2. Procédé selon la revendication 1, caractérisé en ce que l'on ménage le passage (22) suivant une direction généralement verticale, la noix étant disposée dans la position finale désirée.

3. Procédé selon l'une des revendications 1 et 2, caractérisé en ce que l'on ménage le passage (22) au moyen d'un outil de perçage, telle une mèche ou analogue, après repérage du germe (18) par sondage.

4. Procédé selon l'une des revendications 3 et 4, caractérisé en ce que l'on rend étanche le péricarpe (10) de la noix par exemple au moyen d'un vernis ou analogue, et on dispose ensuite la noix sur un support non humide, pour empêcher le développement ultérieur de racines vers l'extérieur de la noix.

5. Procédé selon l'une des revendications 1 à 4, caractérisé en ce que l'apport de la nourriture à la plante ainsi obtenue comprend exclusivement un arrosage foliaire.

6. Procédé selon la revendication 5, caractérisé en ce que cet arrosage est réalisé par pulvérisation d'une solution d'engrais et d'oligo-éléments.

7. Procédé selon l'une des revendications 1 à 4, caractérisé en ce que, après le développement initial des racines (28) dans le mésocarpe (14) de la noix, on ménage au moins une fenêtre (32) d'accès à la cavité endocarpique; on enlève au moins en partie le contenu de la cavité endocarpique; on pratique au moins une ouverture (40) dans l'endocarpe (12) pour établir une communication entre l'endocarpe et le mésocarpe; on remplit la cavité endocarpique d'un substrat (42) pour permettre le développement ultérieur de racines (44) dans le substrat et on arrose ce substrat à travers la fenêtre d'accès (32).

8. Procédé selon la revendication 7, caractérisé en ce que l'on réalise la fenêtre d'accès (32) par découpe de manière à former un chapeau amovible (34) par exemple en forme de calotte.

9. Procédé selon l'une des revendications 7 et 8, caractérisé en ce que l'on réalise la ou les ouvertures (40) de l'endocarpe (12) en exécutant un ou plusieurs perçages à travers l'endocarpe ou bien en enlevant une partie de l'endocarpe.

10. Procédé selon l'une des revendications 7 à 9, caractérisé en ce que l'on introduit des hormones de croissance végétales dans le substrat (42) pour favoriser le développement ultérieur des racines (44) dans le substrat.

11. Procédé selon l'une des revendications 7 à 10, caractérisé en ce que l'on procède à un arrosage foliaire de la plante ainsi obtenue.

12. Plante obtenue par la mise en oeuvre d'un procédé selon l'une des revendications 1 à 11.

FIG. 1

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| | Néant | | A01G7/00 |
| | ----- | | |

|  | DOMAINES TECHNIQUES RECHERCHES (Int. Cl.4) |
|---|---|
| | A01G |
| | A01C |

Le présent rapport a été établi pour toutes les revendications

| Lieu de la recherche | Date d'achèvement de la recherche | Examinateur |
|---|---|---|
| LA HAYE | 08 MAI 1989 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)